# EUROPÄISCHE PATENTANMELDUNG

(11) **EP 2 159 740 A2**
(43) Veröffentlichungstag der Anmeldung: **03.03.2010**
(21) Anmeldenummer: 09100087.7
(22) Anmeldetag: 30.01.2009
(51) Int. Cl.: G06K 19/07, G01C 21/00, G01S 13/84, H01Q 1/32, H04W 64/00

(54) **Verfahren zur Ortung eines RFID-Tags**

(30) Priorität: 27.08.2008 EP 08163091
(71) Anmelder: Albis Technologies AG, 8047 Zürich (CH)
(72) Erfinder: Lauper, Alfred, 8047 Zürich (CH); Wenger, Bruno, 8804 Au/ZH (CH)
(74) Vertreter: Kley, Hansjörg

(57) **Zusammenfassung**

Für eine genaue Ortung eines RFID-Tags (40) in einem Raum (30) wird eine Distanzmessung zu mindestens einem RFID-Schreib/Lesegerät (20) benötigt. Die Genauigkeit der Distanzmessung beruht einerseits auf der festen Verzögerung der Antwort des RFID-Tags (40), die so lange dauert, bis alle Echos vom Signal des Schreib/Lesegeräts(20)im Raum abgeklungen sind und andererseits, dass das Schreib-/Lesegerät stets das allererste empfangene Antwortsignal (25), ungeachtet seines Pegels, auswertet.

## Beschreibung

Die vorliegende Erfindung betrifft ein Verfahren zur Ortung eines RFID-Tags nach dem Oberbegriff des Patentanspruchs 1.

RFID-Tags sind kleine Transponder, die die RFID-Markierungen als gespeicherte Daten enthalten und diese per Funk an RFID-Schreib-/Lesegeräte übertragen. Aktive RFID-Tags bestehen aus einem Prozessor, Speicher und einer Sende-/Empfangseinrichtung, die auf eine bestimmte RFID-Frequenz abgestimmt ist. Im folgenden wird der Begriff «RFID-Schreib-/Lesegerät» der Einfachheit halber abgekürzt mit «RFID-Leser».

Eine genaue Ortung eines RFID-Tags eröffnet dieser Technik weitere Anwendungsfelder, z.B. das Feststellen des Ortes eines Gerätes, das mit einem RFID-Tag versehen ist. Eine Ortung basiert auf der Distanzmessung zwischen RFID-Tag und RFID-Leser.

Zur Distanzmessung sind bisher mehrere Verfahren bekannt.

**Feldstärkemessung**

Mehrerer RFID-Leser in einem Raum messen die Feldstärke des Signals, das ein RFID-Tag aussendet. Aufgrund der Feldstärken und der bekannten geometrischen Anordnung der RFID-Leser wird auf die wahrscheinlichste Position des RFID-Tags im Raum geschlossen.

In der Praxis muss vorgängig der gesamte Raum in einem bestimmten Raster kalibriert werden. Dabei wird ein RFID-Tag mit Sender durch den Raum bewegt und an den Rasterpunkten die von den RFID-Lesern empfangenen Feldstärken aufgezeichnet. Anschliessend darf im Raum nichts mehr verändert werden. Dies betrifft z.B. die Möblierung, Standort von Maschinen und Fahrzeugen, Anordnung von Stellwänden, Lage von grosse Kisten, usw. Dadurch ist dieses Verfahren erheblichen Einschränkungen in der praktischen Anwendung unterworfen.

Das Verfahren «Feldstärkemessung» funktioniert im Prinzip auch umgekehrt: Ein RFID-Tag kann Signale von mehreren RFID-Lesern empfangen, die Empfangsfeldstärken messen und die Resultate wiederum via RFID-Leser dem Hintergrundsystem zur Auswertung übergeben.

Dieses Verfahren «Feldstärkemessung» ist praktisch nur im Freiraum anwendbar. Hindernisse, Reflexionen und Polarisation verfälschen die von den jeweiligen Lesern empfangenen Feldstärken enorm. Die Resultate sind daher sehr ungenau.

**Mittlerer Round Trip Delay**

Die RFID-Leser fordern ein RFID-Tag über standardisierte Kommunikationsprotokolle zur Antwort auf. Das RFID-Tag kann dabei ein handelsübliches Gerät sein, das z.B. ein WLAN-Interface hat.

Aufgrund der über viele Versuche gemittelten Reaktionszeiten kann auf die Distanz zwischen dem RFID-Tag und den RFID-Lesern geschlossen werden.

Das Problem dieses Verfahrens «Mittlerer Round Trip Delay» ist, dass in der Praxis die Kommunikationsprotokolle unterschiedlich lang dauern und damit keine genauen Resultate erzielt werden können. Erst die Mittelwertbildung über sehr viele Messungen ergibt einigermassen brauchbare Resultate, die aber immer noch Ungenauigkeiten von bis zu 10m aufweisen. Bei bewegten Objekten ist eine Ortung nicht mehr möglich.

**Round Trip Phasengang**

Ein RFID-Leser sendet ein Sinussignal mit variabler Frequenz zum RFID-Tag. Das RFID-Tag beaufschlagt das empfangene Signal mit einer Lastmodulation, die wiederum vom RFID-Leser detektiert wird. Aus der Steilheit des Phasengangs zwischen dem ausgesendeten und dem empfangenen Signal kann auf die Distanz geschlossen werden.

Bei passiven RFID-Tags ist die Reichweite durch die Fernspeisung des RFID-Tags via z.B. induktives Feld begrenzt. Mit einem aktiven RFID-Tag sind grössere Reichweiten möglich, so in der Grössenordnung mehrere 10m.

In EP 1 764 623 A1 [1] ist ein Verfahren zur Abstandsbestimmung zwischen einem RFID-Lesegerät und einem RFID-Tag offenbart. In EP 1 764 623 A1 [1] wird allerdings das RFID-Tag als mobiler RFID-Datenspeicher bezeichnet. Es wird ein HF-Trägersignal erzeugt, das sequentiell alternierend eine erste Trägereckfrequenz und eine zweite Trägereckfrequenz enthält, wobei die Phasen der ersten und der zweiten Trägereckfrequenz bei Frequenzwechsel gleich sind. Das HF-Trägersignal wird mit einer bestimmten Sendeleistung abgestrahlt und ein Trägerphasensignal wird erzeugt durch Mischen des HF-Trägersignals mit einem zuvor mit derselben Sendeleistung abgestrahlten, vom mobilen Datenspeicher gestreuten und wieder empfangenen HF- Trägersignal. Es wird jeweils eine Trägerphase für die im Trägerphasensignal enthaltene erste und zweite Trägereckfrequenz sequentiell ermittelt. Der Abstand zwischen dem Schreib-/Lesegerät wird bestimmt aus der Differenz der beiden Trägerphasen, wobei die Sendeleistung des HF-Trägersignals so eingestellt ist, dass eine Erfassungsgrenze kleiner ist als eine Eindeutigkeitsgrenze.

Aus der vorstehenden Kurzbeschreibung wird offensichtlich, dass dieses Verfahren sehr komplex ist und sich am Rande der Ausführbarkeit befindet.

Es liegt daher die Aufgabe vor, für eine auf einer Distanzmessung beruhenden Ortung eines RFID-Tags zu einem RFID-Schreib-/Lesegerät ein Verfahren anzugeben, dass eine genaue Distanzmessung zwischen einem RFID-Tag und dem RFID-Schreib-/Lesegerät ermöglicht und die Nachteile aus dem vorliegenden Stand der Technik eliminiert.

Diese Aufgabe wird durch die im Patentanspruch 1 angegebenen Merkmale gelöst.

So ergeben sich aus der vorliegenden Erfindung folgende Vorteile:

i) Dank der Verzögerung auf dem RFID-Tag erhält der RFID-Leser ein ungestörtes Antwortsignal, weil dieses vom RFID-Tag erst ausgesendet wird, wenn alle Echos abgeklungen sind. Damit kann der Beginn des Antwortsignals präzise festgestellt und gemessen werden.
ii) Geringer Schaltungsaufwand, sowohl im Leser als auch auf den Tags.
iii) Genaue Distanzmessung, auch bei bewegten Objekten.
iv) Robust und resistent gegenüber Fremdstörern, dank breitbandigem Signal (chirp).
v) Schnell, weil bereits eine einzige Messung ein genaues Resultat liefert.
vi) Kein oder nur minimaler Stromverbrauch im RFID-Tag wegen passivem SAW-Filter.

Die Erfindung ist als Erweiterung zu beliebigen, bestehenden mobilen Geräten und RFID-Tags anwendbar, bei denen zusätzlich eine Distanzmessung erforderlich wird.

Die Erfindung wird nachfolgend anhand der Zeichnung beispielsweise näher erläutert. Dabei zeigt:

Figur 1 Prinzip der Distanzmessung;

Figur 2a Darstellung eines zu empfangenden Chirps mit und ohne Reflexionen;

Figur 2b Zeitlage und Pegel von direktem und reflektiertem Signal.

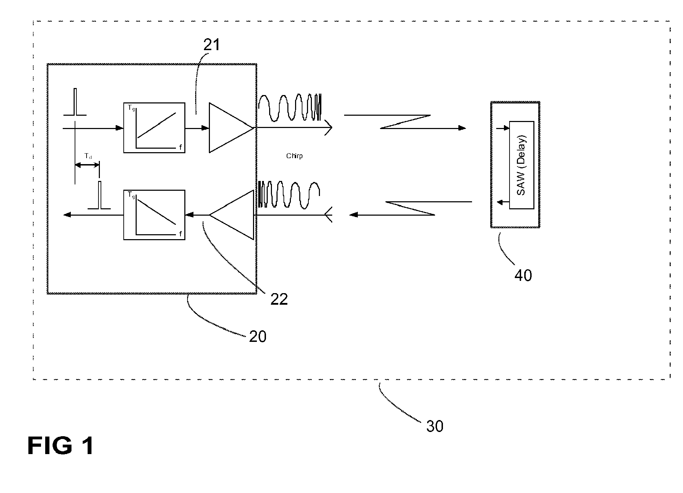

In Figur 1 ist ein RFID-Schreib-/Lesegerät 20 und ein RFID-Tag 40 in einem Raum 30 dargestellt. Das RFID-Tag 40 enthält ein Verzögerungselement, vorzugsweise ein SAW-Filter.

Mit der Wahl einer möglichst grossen Signal-Bandbreite in Senderichtung 21 erhält man einen sehr kurzen Puls und damit können die Reflexionen zeitlich sehr gut aufgelöst werden. Das kurze Signal, das vom RFID-Leser 20 ausgesendet wird, könnte beispielsweise ein kurzer Impuls (Diracstoss) sein. Ein solches Signal hat jedoch den Nachteil, dass es eine geringe Energie hat und daher ein derart kleiner Pegel vom RFID-Tag 40 zurückkommt, dass die Reichweite stark eingeschränkt ist.

Um diesem Problem zu begegnen, kommt das sogenannte Pulskompressionsverfahren zum Einsatz:

Das RFID-Schreib-/Lesegerät 20 enthält im Sendepfad 21 und im Empfangspfad 22 je ein Expansions- bzw. Kompressionsfilter mit z.B. ansteigender, bzw. abfallender Gruppenlaufzeit.

Auf der Sendeseite 21 im RFID-Schreib-/Lesegerät 20 wird das Filter mit einem sehr kurzen Puls angeregt. Das resultierende Signal hinter dem Sende-Expansionsionsfilter ist ein sogenannter Chirp, d.h. ein Sinussignal mit z.B. aufsteigender Frequenz im Bereich zwischen f1 und f2, beispielsweise 2.4GHz und 2.48GHz, d.h. im WLAN-Bereich oder auf einer Zwischenfrequenz. Generell ist ein «Chirp» ein Signal bei dem die Frequenz ansteigt → «up-chirp» oder fällt → «down-chirp».

Ein solcher Chirp hat eine sehr viel grössere Dauer als ein Impuls. Damit hat er auch mehr Energie und entsprechend erhöht sich die Reichweite, über die ein Chirp noch empfangen werden kann. Ein Chirp erlaubt auch eine verbesserte Unterscheidung von zufällig vorhandenen Umgebungsstörungen, z.B. Reflexionen; → Kompressionsgewinn sinngemäss wie ein Korrelationsempfänger. Der Chirp wird vom RFID-Schreib-/Lesegerät 20 verstärkt und ausgesendet. Er hat beispielsweise die Dauer von 1 µs.

Das RFID-Tag 40 empfängt den Chirp und verzögert ihn über sein SAW-Filter um eine feste Dauer, z.B. 1µs. Anschliessend wird der verzögerte Chirp vom RFID-Tag 40 wiederum ausgesendet. Allenfalls kann der Chirp vorher noch verstärkt werden, um damit die Reichweite zu erhöhen. Die feste Dauer ist so gewählt, dass die im Raum 30 auftretenden Echos im wesentlichen abgeklungen sind.

Auf der Empfangsseite 22 des RFID-Schreib-/Lesegerätes 20 wird der ankommende Chirp dem Empfangs-Kompressionsfilter zugeführt. Dieses hat den umgekehrten Phasengang wie das Sende-Kompressionsfilter.

Als Resultat entsteht wiederum ein kurzer Impuls; Verhältnis Langer Puls zu kurzer Puls = Kompressionsgewinn.

Aus der Zeitdifferenz zum ursprünglichen Sende-Impuls kann auf die Laufzeit geschlossen werden; dabei ist die feste Verzögerungszeit zu subtrahieren.

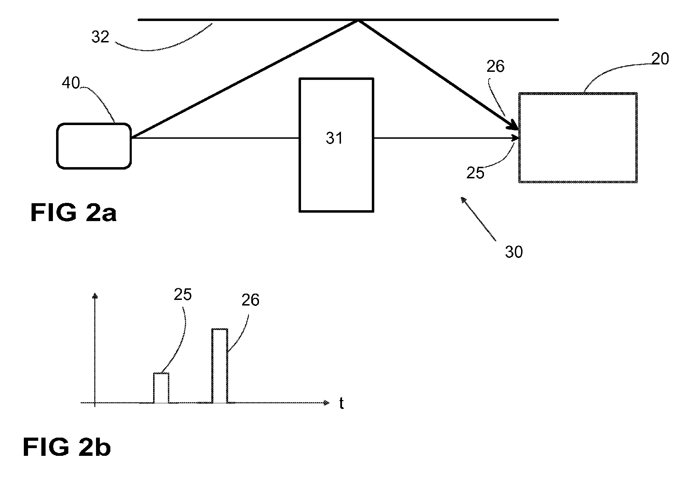

In Figur 2a ist die prinzipielle Anordnung in einem Raum 30 dargestellt für den Empfangspfad 22. Im Raum 30 befinde sich ein Objekt 31 zwischen dem RFID-Tag 40 und dem RFID-Schreib-/Lesegerät 20 sowie eine Wand 32. Das vom RFID-Tag 40 ausgesendete (und verzögerte) an der Wand reflektierte, indirekte Chirpsignal 26 trifft mit höherem Pegel (und höherer Energie) später beim RFID-Schreib-/Lesegerät 20 ein als das direkte und durch das Objekt 31 abgeschwächten Signal 26, wie dies in Figur 2b dargestellt ist. Das RFID-Schreib-/Lesegerät 20 wertet stets das zuerst empfangene Signal 25 zur Bestimmung der Laufzeit aus, ungeachtet seines Pegels. Damit wird das Resultat nicht durch reflektierte Signale, die wegen des längeren Wegs später eintreffen, beeinflusst.

Mit dieser Methode kann die Distanz schon mit einer einzigen Messung ermittelt werden. Sie ist somit auch für bewegte Objekte einsetzbar.

Verzögerungselement: Die Verzögerung auf dem RFID-Tag 40 wird mittels eines passiven SAW-Filters realisiert.

Dies erlaubt sehr präzise Verzögerungen mit einer Genauigkeit von wenigen ns. Die Verzögerung selbst kann z.B. 1µs betragen. SAW-Filter sind passiv und kostengünstig.

Um die Reichweite zu erhöhen, ist am Ausgang des SAW-Filters ein Verstärker vorgesehen, der ebenfalls eine definierte, konstante Laufzeit hat, die sehr gering ist.

Abschätzung der erreichbaren Genauigkeit: Lichtgeschwindigkeit: 30 cm/ns. Ein Signalweg von 30cm (hin und zurück) entspricht einer effektiven Distanz zwischen Leser und Tag von 15 cm. Das heisst: Um beispielsweise eine Distanz auf 15 cm genau zu messen, darf die Ungenauigkeit der Laufzeitmessung höchstens 1 ns betragen.

Die Laufzeiten der Schaltungen im Leser können kompensiert, bzw. kalibriert werden. Dabei ist ein RFID-Tag 40 fest im Raum 30 positioniert und über weitere im Raum 30 ebenfalls fest positionierten RFID-Schreib-/Lesegeräten kann periodisch die Laufzeit über die bekannten Distanzen RFID-Tag 30 - RFID-Schreib-/Lesegeräte 20 kalibriert werden.

Eine Messgenauigkeit des Abstandes zwischen den beiden Pulsen in der Grössenordnung von ca. 1 ns ist machbar. Einzig die Laufzeit des SAW-Filters auf dem RFID-Tag 40 ist massgebend für die Ungenauigkeit. Diese ist temperaturabhängig. Sie variiert im Bereich von wenigen ns. Damit ist für die Distanzmessung eine Genauigkeit von etwa 1 m zu erwarten.

### Liste der verwendeten Bezugszeichen

- 20: RFID-/Schreib-Lesegerät
- 21: Sendepfad; Sendeseite
- 22: Empfangspfad, Empfangsseite
- 223: direkter Empfangspfad
- 224: reflektierter Empfangspfad
- 25: direkt empfangenes Signal
- 26: reflektiertes Signal
- 30: Raum
- 31: Objekt
- 32: Wand
- 40: RFID-Tag

### Liste der zitierten Literatur

- [1]: EP 1 764 623 A1
«Verfahren und Vorrichtung zur Abstandbestimmung zwischen einem Schreib-/Lesegerät und einem Mobilen Datenspeicher»
Siemens Aktiengesellschaft; 80333 München.

### Liste der verwendeten Abkürzungen

- RFID: Radio Frequency Identification
- SAW: Surface acoustic wave

## Patentansprüche

1. Verfahren zur Ortung eines RFID-Tags (40) in einem Raum, wobei die Ortung auf einer Distanzmessung zwischen dem RFID-Tag (40) und einem RFID-Schreib-/Lesegerät (20) beruht, **gekennzeichnet durch** die Verfahrensschritte
A das RFID-Schreib-/Lesegerät (20) sendet ein Signal (21) aus, das vom RFID-Tag (40) empfangen wird;
B das RFID-Tag (40) verzögert dieses Signal um eine fest vorgegebene Verzögerungszeit;
C nach Ablauf der Verzögerungszeit sendet das RFID-Tag (40) das Signal (22, 223, 224) zum RFID-Schreib-/Lesegerät zurück;
D das RFID-Schreib-/Lesegerät (20) misst als Laufzeit des Signals die um die Verzögerungszeit veringerte Zeitdifferenz zwischen dem Aussenden und dem Empfang des Signals;
E aus der Laufzeit des Signals wird die Distanz zwischen RFID-Schreib-/Lesegerät (20) und RFID-Tag (40) bestimmt.

2. Verfahren nach Anspruch 1,
**dadurch gekennzeichnet, dass**
das vom RFID-Schreib-/Lesegerät (20) ausgesendete Signal ein Chirp ist.

3. Verfahren nach Anspruch 1 oder 2,
**dadurch gekennzeichnet, dass**
im Verfahrensschritt B als Verzögerungselement eine passive SAW-Verzögerungsleitung eingesetzt ist.

4. Verfahren nach einem der Ansprüche 1 bis 3,
**dadurch gekennzeichnet, dass**
die fest vorgegebene Verzögerungszeit mindestens so gross ist bis alle noch im Raum vorhandenen Echos des Signals abgeklungen sind.

5. Verfahren nach einem der Ansprüche 1 bis 4,
**dadurch gekennzeichnet, dass**
ein RFID-Tag (40) im Raum an bekannter Stelle fest positioniert ist und somit die Distanzmessung zwischen diesem und einem oder mehreren Schreib-/ Lesegeräten (20) kalibiert werden kann.
